# EUROPEAN PATENT SPECIFICATION

(11) **EP 0 543 351 B1**
(45) Date of publication and mention of the grant of the patent: **12.08.1998**
(21) Application number: 92119643.2
(22) Date of filing: 17.11.1992
(51) Int. Cl.: H04N 9/64, H04N 9/79

(54) **Color contour correction circuit of a color television receiver**
Farbkonturkorrekturschaltung eines Farbfernsehgeräts
Circuit de correction de contour de couleur dans un récepteur de télévision couleur

(30) Priority: 19.11.1991 JP 303295/91
(43) Date of publication of application: 26.05.1993
(73) Proprietor: SANYO ELECTRIC CO., LTD., Moriguchi-shi, Osaka (JP)
(72) Inventor: Hase, Yuji, Hirakata-shi, Osaka-fu (JP)
(74) Representative: Glawe, Delfs, Moll & Partner

(56) References cited:
- EP-A- 0 198 103
- US-A- 4 935 806
- ELECTRONIC COMPONENTS & APPLICATIONS vol. 10, no. 1, 1990, EINDHOVEN , NL pages 37 - 47 , XP229353 PETER KELTING 'TDA 4670 PICTURE SIGNAL IMPROVEMENT (PSI) CIRCUIT'

## Description

### Background of the Invention

### Field of the Invention

The present invention relates to a color contour correction circuit of a color television receiver, and more particularly, to a color contour correction circuit for detecting the contour portion of a color signal to carry out contour enhancement of the color signal and a color television receiver including such a correction circuit.

### Description of the Background Art

In a conventional color television receiver, the contour enhancement of a color signal of a received image is carried out by detecting the contour portion (edge portion) of the color signal and establishing a steep change in the color signal of that portion. A color contour correction circuit is provided for such a purpose.

Such a detection of an edge portion of a color signal includes one method of detecting indirectly the edge portion of the color signal by detecting the edge portion of a luminance signal having correlation with the change in the color signal, and another method of detecting directly the edge portion from the color signal. The former indirect method is described in Japanese Patent Laying-Open No. 62-130092, for example, and a detailed description will not be provided here. The latter direct method will be described hereinafter.

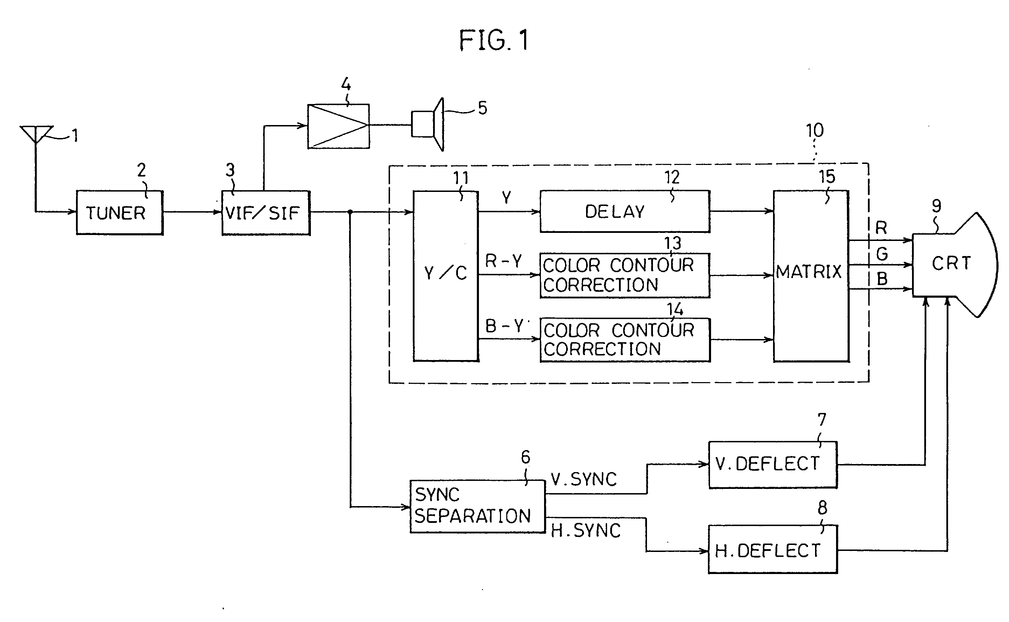

Fig. 1 is a block diagram showing the entire structure of a conventional color television receiver including the above-mentioned color contour correction circuit. Referring to Fig. 1, a television signal received by an antenna 1 and a tuner 2 is separated into respective intermediate frequency signals of video and audio by a VIF/SIF separation circuit 3. The audio intermediate frequency signal provided from VIF/SIF separation circuit 3 is amplified by an audio intermediate frequency amplifying circuit 4, and then supplied to a speaker 5 to be reproduced as sound.

The video intermediate signal (composite video signal) provided from VIF/SIF separation circuit 3 is provided to a video signal processing circuit 10 and a synchronizing separation circuit 6. Synchronizing separation circuit 6 separates a vertical synchronizing signal and a horizontal synchronizing signal from the composite video signal to provide the same to a vertical deflection circuit 7 and a horizontal deflection circuit 8, respectively. A CRT 9 is driven by the outputs of deflection circuits 7 and 8.

The composite video signal supplied to video signal processing circuit 10 enters a luminance signal/color signal separation circuit 11 to be converted into a digital signal by an A/D converter (not shown) incorporated therein. The obtained digital signal is separated to be provided as a luminance signal Y and two color difference signals R-Y and B-Y. The luminance signal Y is delayed for a certain time period via a delay circuit 12 which will be described afterwards and then supplied to a matrix circuit 15. The color difference signals R-Y and B-Y are supplied to color contour correction circuits 13 and 14, respectively, to be subjected to enhancement processings of color contour and then supplied to matrix circuit 15.

Matrix circuit 15 converts the signals Y, R-Y and B-Y into the primary color signals R, G and B that are further converted into analog signals respectively by incorporated D/A converters (not shown). The obtained signals are supplied to CRT 9, whereby CRT 9 is driven to reproduce a received image on the screen thereof.

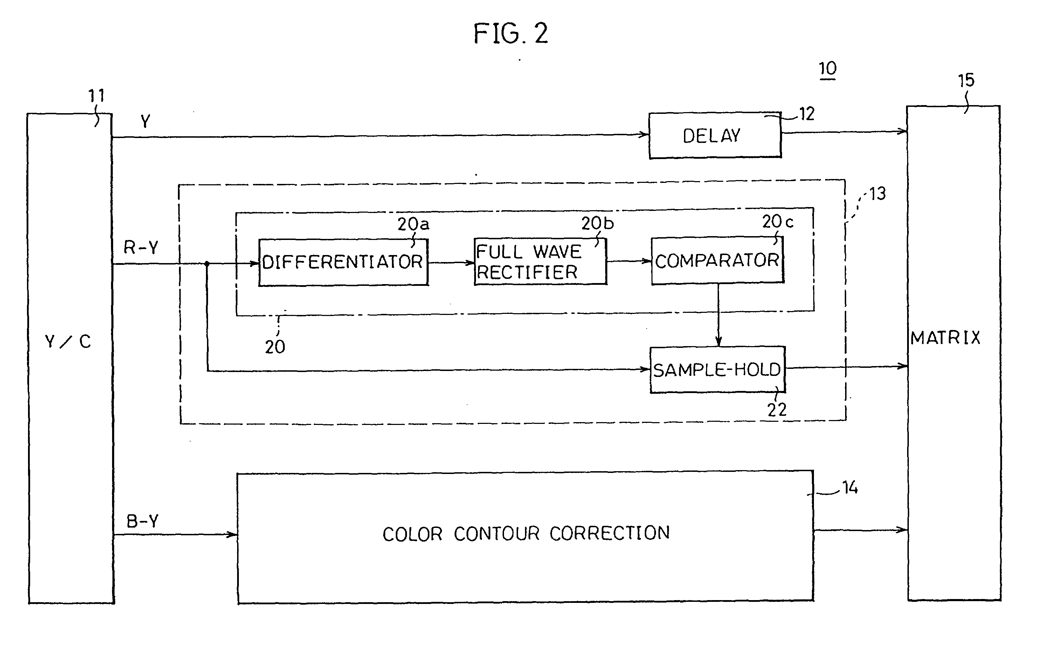

Fig. 2 is a block diagram showing in detail the video signal processing circuit 10 in Fig. 1. Because color contour correction circuits 13 and 14 in Fig. 2 have an identical structure, only the details of the color contour correction circuit 13 for the color difference signal R-Y will be described. The description of the color contour correction circuit 14 for the color difference signal B-Y will not be repeated.

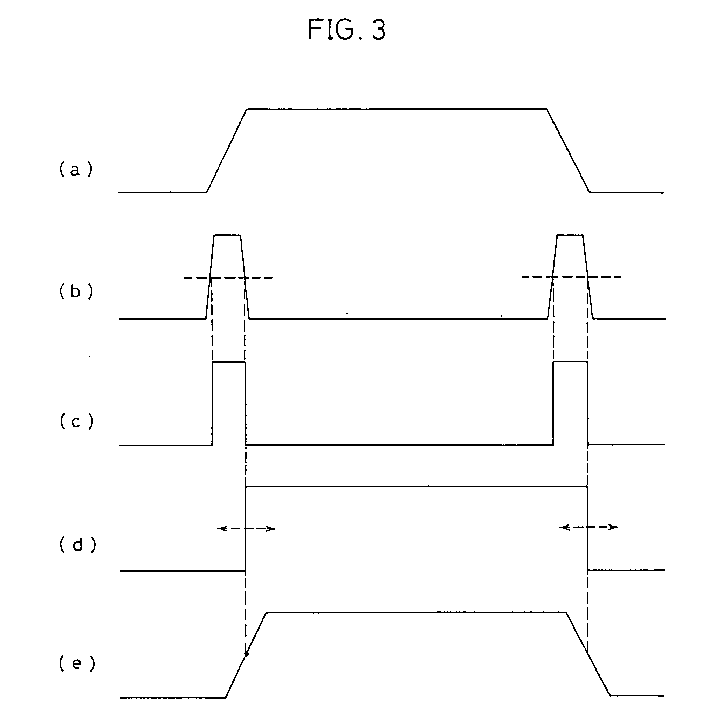

Fig. 3 is a timing chart showing the signal waveforms in respective portions of Fig. 2. The operation of a conventional color contour correction circuit will be described hereinafter with reference to Figs. 2 and 3.

Referring to Fig. 2, a color difference signal R-Y (Fig. 3 (a)) provided from luminance signal/color signal separation circuit 11 is supplied to an edge detection circuit 20 and a sample-hold circuit 22 forming color contour correction circuit 13. The color difference signal R-Y applied to edge detection circuit 20 is differentiated by a differentiation circuit 20a, whereby a pulse output is provided having a waveform corresponding to the degree of the slant of each edge portion (the rising or falling edge), i.e., the frequency and the fluctuation amplitude of the signal R-Y. The pulse output is converted into an absolute value (Fig. 3 (b)) by a full-wave rectifier circuit 20b to be supplied to a comparator 20c to be compared with a predetermined reference value level. As shown in Fig. 3 (b), comparator 20c carries out level comparison between a fixed reference value indicated by the dotted line and an input signal, whereby a pulse of a certain amplitude is generated at a section where the level of the input signal exceeds of the reference value (Fig. 3 (c)). This pulse of the certain amplitude is applied to the control input of a sample-hold circuit 22.

As shown in Fig. 3 (d), sample-hold circuit 22 holds the level of the color difference signal R-Y when the control input (Fig. 3 (c)) is at a high level, and passes the color difference signal R-Y when the control input is at a low level. As a result, a color difference signal R-Y having a steep rise and a steep fall in the respective color contour portions, as shown in Fig. 3 (d), can be obtained from sample-hold circuit 22. Thus, color contour enhancement can be realized on an image.

In order to make the phase of a luminance signal coincide with that of a color difference signal, the timings of steep rising and steep falling of the color difference signal must be in time coincidence with the timings of the intermediate points of the slanted portions of the rise and fall of the luminance signal. The delay circuit 12 of Fig. 2 is provided for this purpose. Delay circuit 12 is a delay circuit having a delay time corresponding to an average phase shift between a luminance signal and a contour-corrected color difference signal. Therefore, the timing of the intermediate points of the rising and falling slant portions of a luminance signal (Fig. 3 (e)) will substantially coincide with the timings of steep rise and steep fall of the corrected color difference signal (Fig. 3 (d)).

However, because the frequency as well as the fluctuation amplitude of the color difference signal R-Y fed to color contour correction circuit 13, i.e. the degree of the rising or falling slant always varies, the differential waveform (Fig. 3 (b)) provided from differentiation circuit 20a responsively changes, which in turn changes the respective timings of the steep rise and steep fall of the color difference signal (Fig. 3 (d)) subjected to color contour correction (refer to the arrow in Fig. 3 (d)). Because the amount of delay of the luminance signal Y in delay circuit 12 is fixed to an average value, there will always be a mismatch between the phase of the luminance signal and that of the contour-corrected color difference signal. If such a phase shift is neglected, the contour of luminance will not match the contour of color, resulting in a disagreeable reproduced image.

Furthermore, each of the color difference signals R-Y and B-Y is generally subjected to phase distortion and includes the vestigial sub-carrier component at the color changing portion due to the group delay characteristics of the signal path. With respect to the vertical direction of the screen, the phases of the sub-carrier between two adjacent upper and lower lines are shifted from each other by 180° in case of the NTSC system (90° in case of the PAL system), so that the phase of such vestigial sub-carrier is also inverted. As a result, the color contour correction circuit will detect the vestigial sub-carrier component generated in the changing portion (contour) of color in the vertical direction on an image to carry out an unnecessary contour enhancement operation, which will result in a jitter in the horizontal direction along the changing portion in the vertical direction. Such a jitter will be conspicuous in proportion to a higher set color gain.

A color contour correction circuit according to the precharacterizing part of claim 1 is known from ,,Electronic Components and Applications", Vol. 10, No. 1, pages 37-47.

### SUMMARY OF THE INVENTION

An object of the present invention is to provide a color contour correction circuit reducing a shift in phase between a luminance signal and a color signal having a color contour enhancement applied, caused by variance in frequency and color saturation in the rise and fall of the color signal, and a color television receiver including such a correction circuit.

Another object of the present invention is to provide a color contour correction circuit reducing horizontal jitter on an image caused by a color contour correction when the color gain is set to a high value, and a color television receiver including such a correction circuit.

These objects are achieved by a color contour correction circuit according to claim 1. The dependent claims are related to further advantageous aspects of the present invention.

The main advantage of the present invention is that a reference value of an edge detection circuit is set in accordance with the color saturation of the color signal component fed into a color contour correction circuit, so that there is no phase shift between the color signal component subjected to a color enhancement processing and the luminance signal component subjected to a delay processing, resulting in reducing jitter in the color changing portion on a screen.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing an entire structure of a conventional color television receiver.

Fig. 2 is a block diagram showing in detail the video signal processing circuit of Fig. 1.

Fig. 3 is a timing chart showing signal waveforms in various portions of the circuit of Fig. 2.

Fig. 4 is a block diagram showing a video signal processing circuit including a color contour correction circuit according to an embodiment of the present invention.

Figs. 5 and 6 are timing charts showing the operation of a color contour correction circuit wherein an edge detection circuit has a fixed reference value.

Fig. 7 is a timing chart showing an operation of a color contour correction circuit according to an embodiment of the present invention.

Figs. 8 and 9 are flow charts showing operations of color contour correction circuits according to the embodiments of the present invention.

### DESCRIPTION OF THE PREFERRED EMBODIMENTS

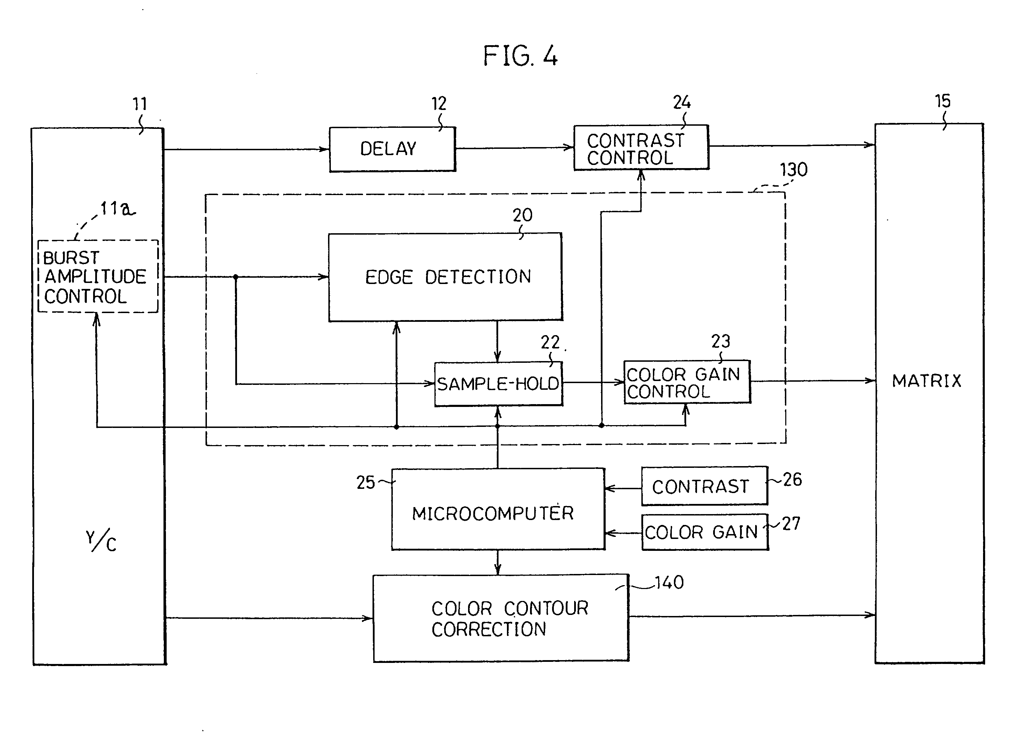

Fig. 4 is a block diagram showing a video signal processing circuit including a color contour correction circuit according to an embodiment of the present invention. In the embodiment of Fig. 4, the components in common to the conventional example of Fig. 2 have the same reference numerals denoted, and their detailed description will not be repeated. Because color contour correction circuits 130 and 140 in the embodiment of Fig. 4 have a structure identical to each other, only the detail of color contour correction circuit 130 for the color difference signal R-Y will be described, and the detail of color contour correction circuit 140 for the color difference signal B-Y will not be repeated.

Referring to Fig. 4, a digital color difference signal R-Y from luminance signal/color signal separation circuit 11 is applied to edge detection circuit 20 and to sample-hold circuit 22. The edge detection circuit 20 is the same as that of the conventional example as shown in Fig. 2 and their contents will not be shown in the drawings. However, it is to be noted that differentiation circuit 20a, full-wave rectifier circuit 20b and comparator 20c are included in edge detection circuit 20.

By this edge detection circuit 20, level comparison is carried out between a differential waveform according to the degree of the rising or falling slant and the fluctuation amplitude in the edge portion of an input color difference signal R-Y and a reference value. Edge detection circuit 20 controls sample-hold circuit 22 to hold the level of the color difference signal R-Y when the differential waveform exceeds a reference level, i.e. when the color difference signal changes at a slant greater than a certain degree, and to pass the color difference signal R-Y as it is when the differential waveform does not exceed a reference level, i.e. when the color difference signal does not change at a slant greater than a certain degree. The embodiment of Fig. 4 differs from the conventional one in Fig. 2 in that the reference value of comparator 20c (refer to Fig. 2) forming edge detection circuit 20 is variable, and can be set variably by a microcomputer 25.

The setting of a reference value is carried out in accordance with the setting of the gain of a color signal, i.e. the saturation of each color signal. There are two methods of setting the gain of a color signal. The first method is to set a color signal gain in accordance with the setting of the contrast of a luminance signal by a user (unicolor control process), and the other method is to directly set a color signal gain by a user. In the case of the former, when the user sets the contrast by operating a contrast control knob 26, microcomputer 25 responds to this setting to control contrast control circuit 24 to apply a predetermined contrast processing to the luminance signal, and a burst amplitude control circuit 11a in luminance signal/color signal separation circuit 11 is controlled to set a color gain according to the contrast set by the user. In the case of the latter, a user operates a color gain control knob 27 to set a color gain, whereby microcomputer 25 responds to this setting to control a color gain control circuit 23 to set the gain of a color difference signal R-Y.

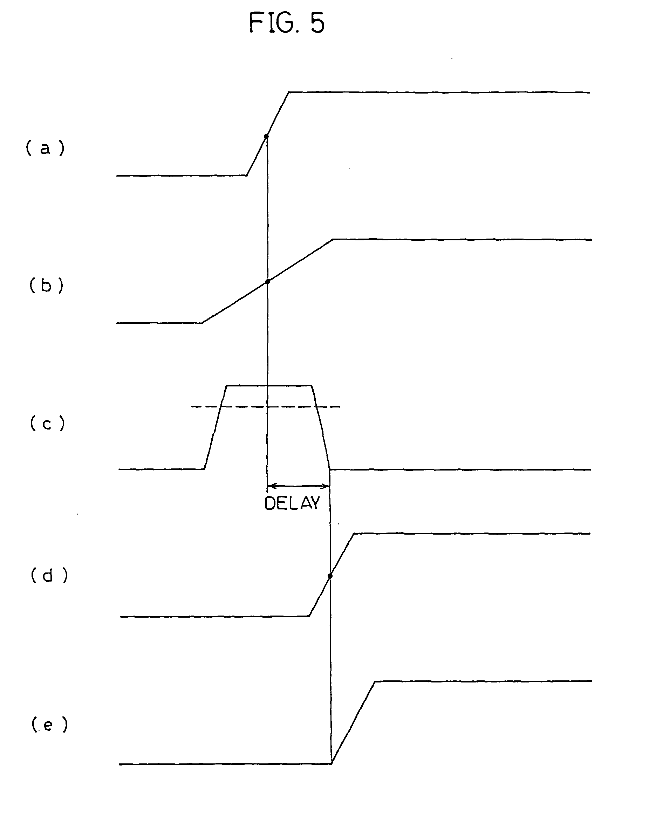

The relation between the setting of a reference value in the comparator of edge detection circuit 20 and the setting of the above-mentioned color gain will be described hereinafter. Fig. 5 is a timing chart indicating the time transition of a luminance signal Y and a color difference signal R-Y when the reference value of the comparator of the edge detection circuit is fixed as in the case of a conventional one. Particularly, (a) and (b) show the manner of time transition of luminance signal Y and color difference R-Y, respectively, in the current horizontal line, (c) shows a pulse corresponding to the degree of the slant of the edge portion, and (d) and (e) show the manner of time transition of luminance signal Y and color difference signal R-Y, respectively, having phase consistency and color contour correction applied.

As shown in Fig. 5 (b), when a color difference signal R-Y of a high level, i.e. of high color saturation is entered into a conventional color contour correction circuit, the color difference signal R-Y is converted into a steeply rising signal as shown in Fig. 5 (e) by a comparison between the above-mentioned fixed reference value (dotted line) and the pulse (c) corresponding to the slant of the edge portion. Before color contour correction, the timing of the intermediate point of the rise of luminance signal Y (a) matches the timing of the intermediate point of the rise of a color difference signal R-Y (b), and the phases of both signals are in coincidence.

In order to maintain the consistency of the phase, the luminance signal Y is delayed by a predetermined time period (Fig. 5 (d)) by delay circuit 12, whereby the phase thereof of coincides with that of the color difference signal R-Y (e) subjected to contour enhancement.

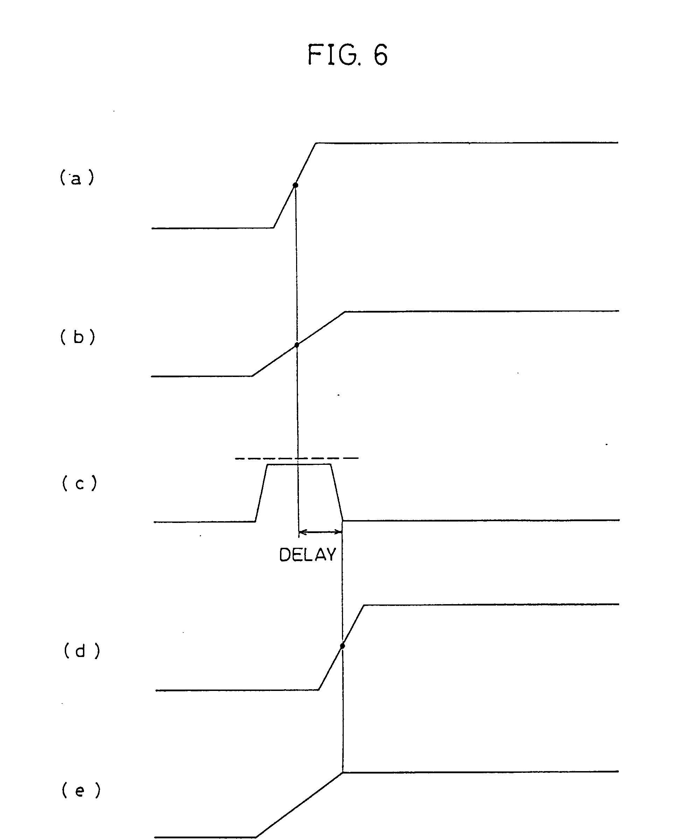

Fig. 6 is a timing chart showing the operation when a color difference signal R-Y of a low level, i.e. of low color saturation is input into such a conventional color contour correction circuit. Similarly to Fig. 5, Fig. 6 (a) and (b) show the manner of time transition of a luminance signal Y and a color difference signal R-Y, respectively, in the current horizontal line, (c) shows a pulse corresponding to the degree of the slant of the edge portion, and (d) and (e) show the manner of time transition of a luminance signal Y and a color difference signal R-Y, respectively, that are actually output.

Referring to Fig. 6 (b), when a color difference signal R-Y having a low level is entered and a level of the obtained pulse (c) is lower than the fixed reference value (dotted line) of the comparator of edge detection circuit 20, a control signal of a high level is not provided from edge detection circuit 20 to sample-hold circuit 22, and contour correction of the color difference signal R-Y is not carried out. Therefore, a color difference signal R-Y is provided as it is from sample-hold circuit 22, as shown in Fig. 6 (e). The luminance signal is delayed by delay circuit 12 by a period identical to that of the case of Fig. 5, so that there is a phase shift between the output luminance signal Y and the color difference signal R-Y, as shown in Figs. 6 (d) and (e).

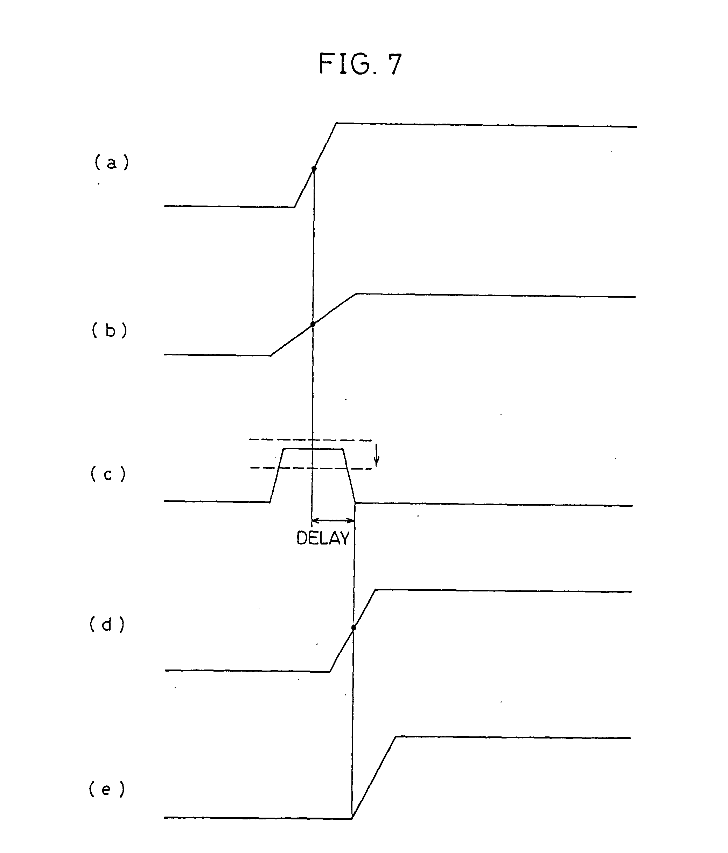

Fig. 7 is a timing chart showing an operation of an embodiment of the present invention in which the reference value of the comparator of edge detection circuit 20 is made variable according to the gain i.e. the color saturation of a color signal. When the gain of the color signal is set to high value, i.e. when the level of the input color difference signal R-Y is high in this embodiment, microcomputer 25 detects this to provide a control signal that sets the reference value of the comparator to a high value (as shown in Fig. 5 (c) for example) to edge detection circuit 20. In this case, the operation is identical to that shown in Fig. 5, and the details will not be repeated.

When the gain of the color signal is set to a low value, i.e. when the level of the input color difference signal R-Y is low, microcomputer 25 detects this to set the reference value of the comparator to a low value as shown in the dotted line of Fig. 7 (c). As a result, a control signal of a high level is provided from edge detection circuit 20 to sample-hold circuit 22, whereby color contour enhancement is applied to the color difference signal R-Y to be output, as shown in Fig. 7 (e). There is no shift in phase between this output R-Y and the luminance signal Y (Fig. 7 (d)) that is delayed by a fixed delay amount by delay circuit 12.

As mentioned above, there are various methods of setting the gain of a color signal. Respective cases will be described hereinafter of a reference value setting control by microcomputer 25.

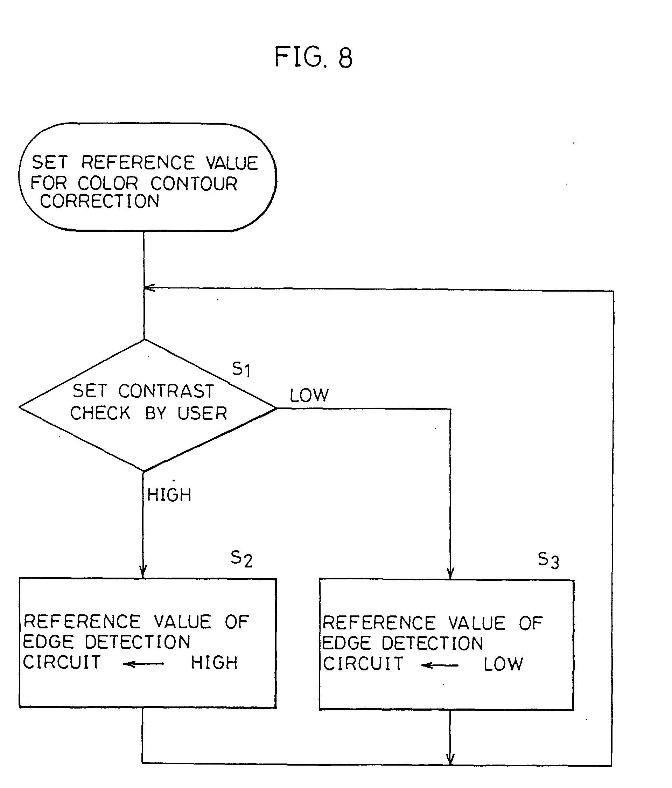

Fig. 8 is a flow chart showing a reference value setting control in association with the aforementioned unicolor control process. In this process, microcomputer 25 detects the operation of a contrast control knob 26 by a user to make determination whether the set contrast is a high value or a low value (steps S1).

If the contrast set by the user is high, microcomputer 25 generates a control signal that sets the reference value of the comparator of edge detection circuit 20 to a high value because the color signal gain is also set to a high value by burst amplitude control circuit 11a in accordance with the set contrast (step S2). If the contrast set by the user is low, microcomputer 25 generates a control signal that sets the reference value of edge detection circuit 20 to a low value because the color signal gain is also set to a low value by burst amplitude control circuit 11a in accordance with the set contrast (step S3). This control will be repeated sequentially thereafter.

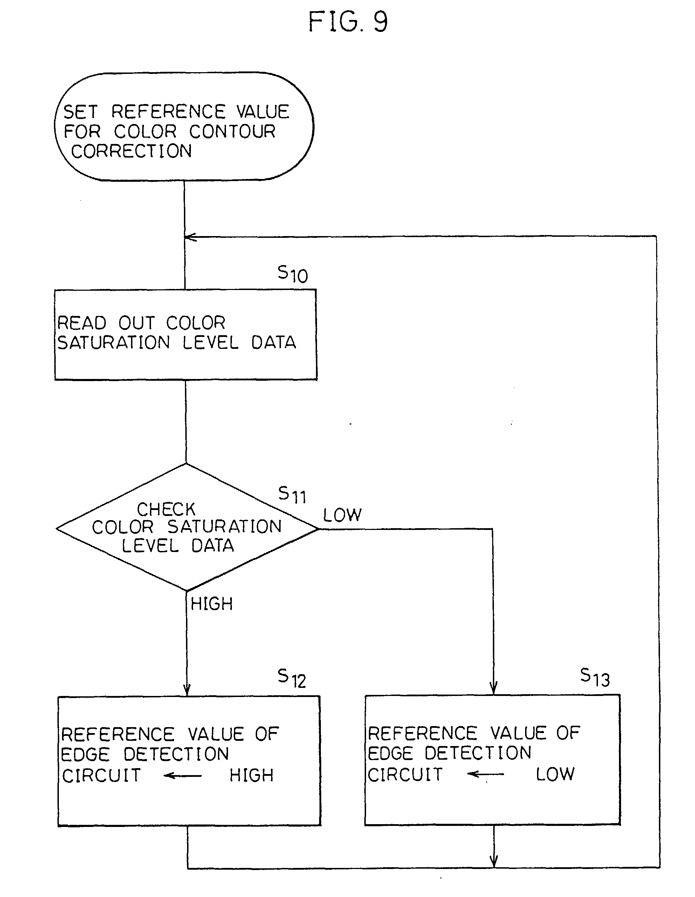

Fig. 9 is a flow chart showing a process where a reference value setting control is carried out by detecting the color saturation of a color signal itself regardless of the contrast set by a user. In this process, microcomputer 25 detects the level of color saturation of the color difference signal R-Y provided from luminance signal/color signal separation circuit 11 (step S10) to make determination whether the detected level of color saturation is a high value or a low value (step S11).

If the detected color saturation level is high, microcomputer 25 generates a control signal that sets the reference value of edge detection circuit 20 to a high value (step S12). If the detected color saturation level is low, microcomputer 25 generates a control signal that sets the reference value of edge detection circuit 20 to a low value (step S13). This control is repeated sequentially thereafter.

The reference value of the comparator of edge detection circuit 20 may be set in accordance with a direct setting of a color signal gain by the operation of knob 27 by a user.

Thus, according to an embodiment of the present invention, the reference value of a comparator of an edge detection circuit is set in accordance with the color saturation of each color difference signal supplied to a color contour correction circuit. Therefore, shift in phase between a color difference signal subjected to color contour enhancement and a luminance signal is eliminated, which in turn reduces jitter in the color changing portion on an image.

In addition, the reference value of the comparator of the edge detection circuit is set to a high value when the color signal has a high color saturation to make color contour correction less effective, so that the color contour correction circuit is prevented from operating erroneously, to further reduce jitter in the horizontal direction along the changing portion in the vertical direction.

Although the present invention has been described and illustrated in detail, it is clearly understood that the same is by way of illustration and example only and is not to be taken by way of limitation, the scope of the present invention being limited only by the terms of the appended claims.

## Claims

1. A color contour correction circuit comprising:
means (11) for extracting and providing a color signal component of an input video signal,
means (25) for setting a reference level,
means (20) for detecting an edge portion of said color signal component when said color signal component changes at a slant greater than said reference level,
means (22) for holding the amplitude value of said color signal component to provide that value during a period corresponding to an edge portion of said detected color signal component, and for providing said color signal component as it is during a period other than said period,
**characterized** by
means (25) for detecting the color saturation of said color signal component and by
means (25) for setting the reference level for detecting an edge portion of said color signal component in accordance with said detected color saturation.

2. The color contour correction circuit according to claim 1, wherein said reference level is set to a high value when said detected color saturation is high, and said reference level is set ot a low value when said detected color saturation is low.

3. The color contour correction circuit according to claim 2, further comprising means for setting the gain of said color signal component,
wherein said color saturation detection means detects the color saturation of said color signal component in accordance with the gain set by said gain setting means.

4. The color contour correction circuit according to claim 3, wherein said gain setting means comprises means for setting the gain of said color signal component in accordance with a set contrast of a luminance signal.

5. A color television receiver comprising a color contour correction circuit according to any of the preceding claims, said television receiver comprising:
means (2) for receiving a video signal,
means (11) for separating said received video signal into a luminance signal component and color signal components,
means (12) for delaying said luminance signal component and color signal components,
means (12) for delaying said luminance signal component by a time period required for color contour enhancement processings by said color contour correction means,
means (15) for converting said color signal components subjected to said color contour enhancement processings and said delayed luminance signal component into the three primary color signals, and
means (9) for converting said three primary color signals into an image for display.

## Patentansprüche

1. Farbkontur-Korrekturschaltung, welche aufweist:
Mittel (11) zum Extrahieren und Bereitstellen einer Farbsignal-Komponente eines Eingabe-Videosignals,
Mittel (25) zum Einstellen eines Referenzpegels,
Mittel (20) zum Erfassen eines Flankenabschnitts der Farbsignal-Komponente, wenn sich die Farbsignal-Komponente mit einer Schräge ändert, die größer als der Referenzpegel ist,
Mittel (22) zum Halten des Amplitudenwerts der Farbsignal-Komponente, um den Wert während einer Periode bereitzustellen, die einem Flankenabschnitt der erfaßten Farbsignal-Komponente entspricht, und zum Bereitstellen der Farbsignal-Komponente in unverändertem Zustand während einer zu dieser Periode unterschiedlichen Periode,
**gekennzeichnet** durch
Mittel (25) zum Erfassen der Farbsättigung der Farbsignal-Komponente, und
Mittel (25) zum Einstellen des Referenzpegels zum Erfassen eines Flankenabschnitts der Farbsignal-Komponente entsprechend der erfaßten Farbsättigung.

2. Farbkontur-Korrekturschaltung nach Anspruch 1, bei welcher der Referenzpegel auf einen hohen Wert eingestellt wird, wenn die erfaßte Farbsättigung hoch ist, und der Referenzpegel auf einen niedrigen Wert eingestellt wird, wenn die erfaßte Farbsättigung niedrig ist.

3. Farbkontur-Korrekturschaltung nach Anspruch 2, welche weiterhin Mittel zum Einstellen der Verstärkung der Farbsignal-Komponente aufweist,
wobei die Farbsättigung-Erfassungsmittel die Farbsättigung der Farbsignal-Komponente entsprechend der durch die Verstärkung-Einstellmittel eingestellten Verstärkung erfassen.

4. Farbkontur-Korrekturschaltung nach Anspruch 3, bei welcher die Verstärkung-Einstellmittel Mittel aufweisen, um die Verstärkung der Farbsignal-Komponente entsprechend einem eingestellten Kontrast eines Luminanzsignals einzustellen.

5. Farbfernsehempfänger mit einer Farbkontur-Korrekturschaltung nach einem der vorhergehenden Ansprüche, wobei der Fernsehempfänger aufweist:
Mittel (2) zum Empfangen eines Videosignals,
Mittel (11) zum Trennen des empfangenen Videosignals in eine Luminanzsignal-Komponente und Farbsignal-Komponenten,
Mittel (12) zum Verzögern der Luminanzsignal-Komponente und der Farbsignal-Komponenten,
Mittel (12) zum Verzögern der Luminanzsignal-Komponente um eine Zeitdauer, die für die Farbkonturverbesserung-Behandlungen durch die Farbkontur-Korrekturmittel erforderlich ist,
Mittel (15) zum Umwandeln der Farbsignal-Komponenten, die den Farbkonturverbesserung-Behandlungen unterzogen wurden, und der verzögerten Luminanzsignal-Komponente in drei Primärfarbsignale, und
Mittel (9) zum Umwandeln der drei Primärfarbsignale in ein Bild für die Anzeige.

## Revendications

1. Circuit de correction de contour de couleur comprenant:
des moyens (11) pour extraire et fournir une composante de signal de couleur d'un signal vidéo d'entrée,
des moyens (25) pour régler un niveau de référence,
des moyens (20) pour détecter une partie de front d'impulsion de ladite composante de signal de couleur lorsque ladite composante de signal de couleur change avec une inclinaison supérieure audit niveau de référence,
des moyens (22) pour maintenir la valeur d'amplitude de ladite composante de signal de couleur afin de fournir cette valeur lors d'une période correspondant à une partie de front d'impulsion de ladite composante de signal de couleur détectée, et pour fournir ladite composante de signal de couleur sans modification lors d'une période autre que ladite période,
**caractérisé** par
des moyens (25) pour détecter la saturation de couleur de ladite composante de signal de couleur, et
des moyens (25) pour régler le niveau de référence pour détecter une partie de front d'impulsion de ladite composante de signal de couleur selon ladite saturation de couleur détectée.

2. Circuit de correction de contour de couleur selon la revendication 1, dans lequel ledit niveau de référence est réglé à une haute valeur lorsque ladite saturation de couleur détectée est haute, et ledit niveau de référence est réglé à une basse valeur lorsque ladite saturation de couleur est basse.

3. Circuit de correction de contour de couleur selon la revendication 2, comprenant en outre des moyens pour régler le gain de ladite composante de signal de couleur,
dans lequel ledit moyen de détection de saturation de couleur détecte la saturation de couleur de ladite composante de signal de couleur selon le gain réglé par ledit moyen de réglage de gain.

4. Circuit de correction de contour de couleur selon la revendication 3, dans lequel ledit moyen de réglage de gain comprend des moyens pour régler le gain de ladite composante de signal de couleur selon un contraste réglé d'un signal de luminance.

5. Récepteur de télévision couleur comprenant un circuit de correction de contour de couleur selon l'une quelconque des revendications précédentes, ledit récepteur de télévision comprenant:
des moyens (2) pour recevoir un signal vidéo,
des moyens (11) pour séparer ledit signal vidéo reçu en une composante de signal de luminance et des composantes de signal de couleur,
des moyens (12) pour retarder lesdites composante de signal de luminance et composantes de signal de couleur,
des moyens (12) pour retarder ladite composante de signal de luminance d'une période nécessaire à des traitements d'augmentation de contour de couleur par ledit moyen de correction de contour de couleur,
des moyens (15) pour convertir lesdites composantes de signal de couleur soumises auxdits traitements d'augmentation de contour de couleur et ladite composante de signal de luminance retardée en trois signaux de couleur primaire, et
des moyens (9) pour convertir lesdits trois signaux de couleur primaire en une image pour l'affichage.
